# EUROPÄISCHE PATENTSCHRIFT

(11) **EP 0 796 212 B1**
(45) Veröffentlichungstag und Bekanntmachung des Hinweises auf die Patenterteilung: **23.09.1998**
(21) Anmeldenummer: 95942134.8
(22) Anmeldetag: 13.12.1995
(51) Int. Cl.: B65G 1/04, B66F 9/07

(54) **VERFAHREN UND VORRICHTUNG ZUM HANDHABEN UND STAPELN VON PRESSBALLEN**
METHOD AND DEVICE FOR HANDLING AND STACKING PRESSED BALES
PROCEDE ET DISPOSITIF DE MANUTENTION ET D'EMPILAGE DE BALLES PRESSEES

(30) Priorität: 13.12.1994 DE 9419918 U
(43) Veröffentlichungstag der Anmeldung: 24.09.1997
(73) Patentinhaber: AUTEFA MASCHINENFABRIK GMBH, D-86316 Friedberg (DE)
(72) Erfinder: HIRSCHEK, Herwig, D-86399 Bobingen (DE)
(74) Vertreter: Ernicke, Hans-Dieter, Dipl.-Ing.
(86) Internationale Anmeldenummer: EP9504913
(87) Internationale Veröffentlichungsnummer: WO9618560

(56) Entgegenhaltungen:
- DE-A- 2 509 223
- FÖRDERN UND HEBEN, Bd. 13, Nr. 12, Dezember 1963, 12-040, Seiten 831-833, XP002000337 H.KRIPPENDORFF: "Das automatische Lager - Amerikanische Beispiele der Teil- und Voll-Automatisierung"
- MATERIALS HANDLING NEWS, Nr. 354, Juni 1987, Seite 26 XP002000338 "Robots dispense mixes at dye works"

## Beschreibung

Die Erfindung betrifft ein Verfahren und eine Vorrichtung zum Handhaben und Stapeln von Preßballen in einem Ballenlager mit den Merkmalen im Verfahrens- und Vorrichtungshauptanspruch.

Aus der SE-C-105 271 ist eine Stapelvorrichtung in einem Lagerhaus für Stückgüter bekannt. Bei den Stückgütern kann es sich auch um Ballen unbekannten Inhalts handeln. Die Stapelvorrichtung wird manuell bedient und stapelt die Stückgüter zu einem einzigen mehrlagigen und mehrere eng geschlossene Reihen umfassenden hohen Stapel auf. Zum Transport der Stückgüter ist eine handbediente Kranbrücke mit einem daran längs sowie quer beweglich gelagerten Laufwagen vorgesehen, an dem an Seilen eine Kranflasche mit einem Scherengreifer hängt. In der Kranbrücke ist außerdem noch ein Förderer für die Zuführung der Stückgüter vorhanden. Die Bedienungsperson benutzt den Laufwagen, um die Stückgüter von dem Förderer aufzunehmen und an geeigneter Stelle auf dem Stapel abzusetzen und manuell noch zurechtzurücken. Diese Anordnung ist sehr personalaufwendig und teuer. Außerdem ist keine Sortierung der Stückgüter möglich. Der Greifer kann nur einen einzigen Ballen greifen und diesen lediglich von oben fassen. Außerdem ist dazu stets ein absoluter Stillstand des Krans erforderlich. Die Förderkapazität ist dadurch empfindlich eingeschränkt. Ungünstig ist ferner die Schwing- und Drehneigung der führungslosen Kranflasche, die eine exakte Positionierung der Stückgüter erschwert.
Die gezeigte Anordnung ist nur für regelmäßig geformte und sehr stabile Stückgüter geeignet, nicht aber für Preßballen aus Fasermaterialien, die sehr unterschiedliche Außenformen aufweisen können.

In der Praxis ist es ferner für den Bereich von Preßballen aus textilen Fasern bekannt, die Preßballen mit Flurförderzeugen zu transportieren und von der Ballenpresse zu einer Lagersteile zu bringen und dort in Reihen nebeneinander und in mehreren Lagen übereinander zu stapeln. Die DE-A-40 29 759 zeigt hierfür einen Gabelstapler. Diese Technik ist personalaufwendig und fehleranfällig, wenn in einer Pressenanlage unterschiedliche Preßballen hergestellt werden, die getrennt gehandhabt und gelagert werden sollen.

In der Praxis kommen auch Hochregallager zum Einsatz, bei denen die Preßballen einzeln in Regalfächer eingelagert werden. Die Lagertechnik ist sehr teuer, weil sie einen hohen Platzbedarf sowie großen Bau- und Steueraufwand bedingt.

Es ist Aufgabe der vorliegenden Erfindung, eine bessere und wirtschaftlichere Möglichkeit zum Handhaben und Stapeln von Preßballen aufzuzeigen.

Die Erfindung löst diese Aufgabe mit den Merkmalen im Verfahrens- und Vorrichtungshauptanspruch.
Im Ballenlager ist mindestens eine Stapelvorrichtung angeordnet, die das Ballenlager portalartig überfahren und die Ballen einzeln oder in Stapeln mit einer hängend vertikal geführten Greifeinrichtung mit seitlichen Griff fassen, transportieren und aufstapeln kann. Die Stapelvorrichtung ist schneller, betriebssicherer und wirtschaftlicher als die vorbekannten Lösungen.

Zur weiteren Anlagenoptimierung ist eine anlagenübergreifende Steuerung vorgesehen. Dadurch kann das Ballenlager weitestgehend automatisch bedient und verwaltet werden. Dies spart Personal, Zeit und Kosten.

Die Steuerung beinhaltet einen Rechner mit einem Lagerverwaltungsprogramm. Sie kann außerdem eine Datenbank für die virtuellen Speicher- oder Stapelplätze besitzen. Darin werden der Lagerort und die relevanten produktbezogenen Daten, wie Ballenidentität, Ballen- bzw. Fasersorte, Ballengröße, Faserqualität, Herstelldatum und dgl. gespeichert. Mangels einer festen Lagereinteilung, wie sie bei einem Regallager mit starren Lagerplätzen vorhanden ist, werden bei der Ballenlagerverwaltung die Lagerort in Relation zueinander bestimmt und gespeichert.

Die Lagerverwaltung gestattet eine unsortierte und besonders schnelle Einlagerung. Dabei kann auch eine Qualitätskontrolle ohne Zeitverlust stattfinden. Auf eine aufwendige manuelle Markierung der Ballen kann verzichtet werden. Dies wirkt sich in einer verringerten Unfallgefahr und einer Steigerung der zulässigen Stapelhöhe aus.

In betriebsfreien oder ruhigeren Zeiten, z.B. nachts, kann das Ballenlager automatisch umsortiert werden. Beim Auslagern stehen dann geordnete, sortenreine Ballenstapel oder Stapelreihen zur schnellen Abholung und Verladung zur Verfügung.

Für eine möglichst große Beweglichkeit der Greifeinrichtung empfiehlt es sich, den herabhängenden Führungsbalken mitsamt der Greifeinrichtung drehbar am Laufwagen der fahrbaren Kranbrücke zu lagern. Zur Steigerung der Geschwindigkeit und des Ballendurchsatzes ist es ferner günstig, die Greifeinrichtung mit mehreren Gabeln auszurüsten, die zum Beispiel einen Kleinstapel aus drei Preßballen handhaben kann.

Ein solcher Kleinstapel paßt mit der üblichen Ladehöhe von LKWs oder Containern zusammen und erlaubt eine sehr schnelle Beladung. Durch die Kleinstapel kann ferner die Leistung der Stapelvorrichtung erhöht werden. Dies ist angesichts der unterschiedlichen Verfügungszeiten für Ein- und Auslagern vorteilhaft. Bei industriellen automatischen Anlagen läuft die Produktion und Einlagerung der Ballen Tag und Nacht sieben Tage in der Woche. Das Auslagern und Verfrachten der Ballen mit Container oder LKW kann jedoch nur tagsüber sowie unter der Woche stattfinden und muß in entsprechend kürzerer Zeit ablaufen. Durch das Handling von Kleinstapeln aus drei Ballen ist die hierfür erforderliche Kran- und Stapelleistung gegeben.

Die erfindungsgemäße Stapelvorrichtung erlaubt es, die Ballen sehr platzsparend zu lagern und die Stapelreihen nahe aneinander anzuschließen. In den Stapeln liegen die Ballen aufeinander, wobei die Stapelreihen von der zentralen Fahrgasse aus auf- und abgebaut werden. Auf große freizuhaltende Fahrgassen zwischen den Reihen kann verzichtet werden. Teure Stellagen wie bei Regallagern sind beim erfindungsgemäßen Ballenlager entbehrlich.

In einer weiteren Verbesserung ist vorgesehen, daß der Stapelvorrichtung eine oder mehrere Zwischenlager vorgeschaltet sind, in denen auf getrennten Speicherplätzen kleine Preßballenstapel gebildet und zur Abholung durch die Stapelvorrichtung bereitgestellt werden. Hierbei lassen sich Preßballen mit unterschiedlicher Größe, unterschiedlichem Inhalt oder unterschiedlicher Qualität getrennt in sortenreinen Stapeln bereitstellen. Die Zwischenlager können als Puffer wirken und die Stapelvorrichtung entlasten. Hierdurch ist es auch möglich, mit einer Stapelvorrichtung einen größeren Abschnitt des Ballenlagers zu bedienen. Dies steigert ebenfalls die Kapazität der Stapelvorrichtung und des Ballenlagers.

Die Zwischenlager können mit ein oder mehreren vorgeschalteten Ballenpressen direkt oder durch eventuell weitere Lager mittelbar verbunden sein.

Ferner wirkt die Stapelvorrichtung vorteilhafterweise mit einer Ausgabestelle zusammen, in der die Preßballen wieder einzeln oder in kleinen Stapeln von zwei oder drei Stück zur Abholung und weiteren Verwendung bereitgestellt werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Fig. 1: in einer schematischen Draufsicht ein aus mehreren Abschnitt bestehendes Ballenlager mit mehreren Stapelvorrichtung und zusätzlichen Anlageteilen und
- Fig. 2: eine Stapelvorrichtung im Querschnitt entsprechend der Schnittlinie II-II von Figur 1.

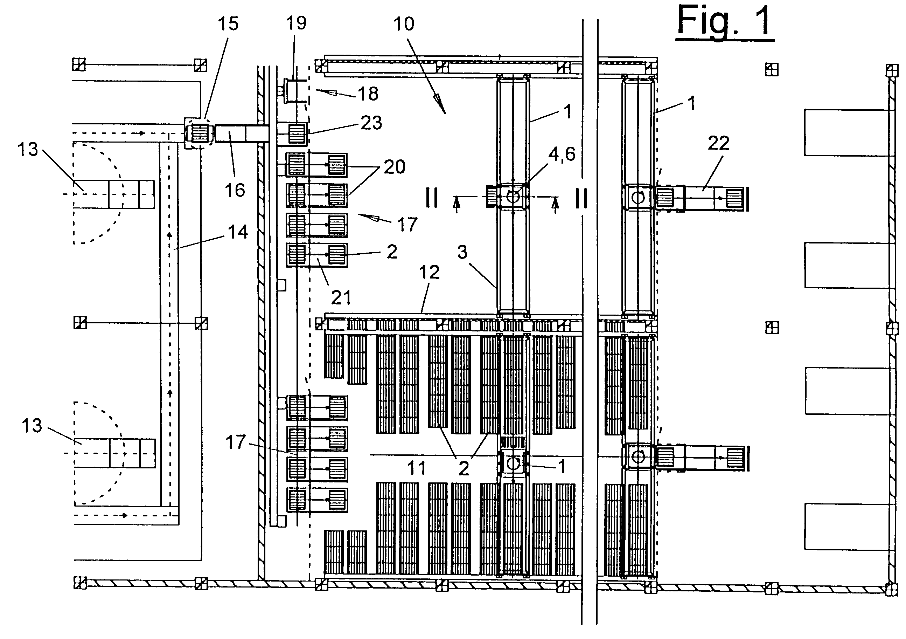

Das in Fig. 1 dargestellte Ballenlager (10) verfügt in der dargestellten Ausführungsform über zwei Lagerabschnitte.
Es können auch nur ein oder mehrere Abschnitte sein. In jedem Lagerabschnitt befinden sich zwei nachfolgend näher beschriebene Stapelvorrichtungen (1), mit denen Preßballen (2) gehandhabt und gestapelt werden. Bei den Preßballen (2) handelt es sich vorzugsweise um Ballen, die in einer vorgeschalteten Ballenpresse (13) unter hohem Druck aus Kunststoffasern gepreßt werden. Die Textilfasern können in kurzgeschnittener Form als sogenannte Stapelfaser oder in Strangform als sogenanntes Tow vorliegen. Alternativ können die Preßballen aber auch aus anderen Materialien, zum Beispiel pflanzlichen Kleinteilen wie Stroh oder dergleichen bestehen. Die Preßballen (2) sind vorzugsweise in einer Folie verpackt und werden ggf. durch mehrere Umreifungen zusammengehalten.

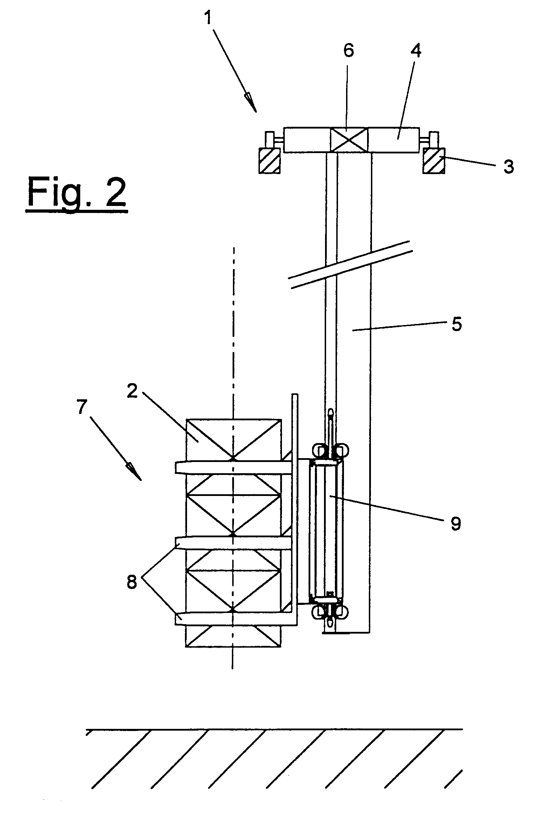

In jedem Lagerabschnitt sind in der dargestellten Ausführungsform zwei Stapelvorrichtungen (1) angeordnet.
Es können aber auch weniger oder mehr sein, je nach Abschnittsgröße. In Fig. 1 sind die Stapelvorrichtungen (1) in Draufsicht und in Fig. 2 in einer geschnittenen Seitenansicht dargestellt.

Die einzelne Stapelvorrichtung (1) besteht aus einer Kranbrücke (3), die auf aufgeständerten Schienen (12) über dem Ballenlager (10) bzw. dem zugeordneten Lagerabschnitt längsverfahrbar ist. Die Kranbrücke (3) ist als innenseitig offener Rahmen ausgebildet, auf dem ein Laufwagen (4) querverfahrbar ist. Am Laufwagen (4) hängt ein steifer Führungsbalken (5) vorzugsweise vertikal nach unten, der eine höhenverfahrbare Greifeinrichtung (7) trägt. Der Führungsbalken (5) ist über eine Dreheinrichtung (6) am Laufwagen (4) um die vertikale Achse schwenkbar aufgehängt. Um die Horizontalachsen ist er kippfest gelagert. Die Kranbrücke (3), der Laufwagen (4) und die Dreheinrichtung (6) verfügen über geeignete Antriebe (nicht dargestellt).

Der stangen- oder rahmenförmig ausgebildete Führungsbalken (5) trägt ein Fahrwerk (9), an dem die Greifeinrichtung (7) befestigt ist. Das Fahrwerk (9) ist am Führungsbalken (5) vertikal beweglich geführt und kann mit einem geeigneten Antrieb (ebenfalls nicht dargestellt) auf- und abfahren.

Die Greifeinrichtung (7) verfügt in der gezeigten Ausführungsform über drei Gabeln (8), die mit Abstand übereinander angeordnet sind. Jede Gabel (8) hat z.B. zwei Greifer oder Zinken, die zueinander querbeweglich gelagert und angetrieben sind. Die drei Gabeln (8) können gemeinsam oder einzeln angetrieben sein. Die Greifeinrichtung (7) kann mit den Gabeln (8) die Preßballen (2) seitlich fassen und mit den Zinken einspannen. In der gezeigten Ausführungsform greifen die drei Gabeln (8) einen kleinen Stapel von drei aufeinander liegenden Preßballen (2), wobei jede Gabel (8) einen Preßballen (2) faßt. In anderen Ausführungsformen kann die Zahl der Preßballen (2) und der Gabeln (8) variieren.

Mittels der Greifeinrichtung (7) können die Preßballen (2) angehoben und mit der Kranbrücke (3) bzw. dem Laufwagen (4) zweiachsig im Ballenlager (10) bzw. im Lagerabschnitt verfahren werden. Aus den Kleinstapeln können größere Ballenstapel gebildet werden, die aus mehreren Lagen übereinander und aus mehreren in Reihen hintereinander angeordneten Stapeln bestehen. Figur 1 zeigt im unteren Lagerabschnitt diese Stapelreihen. Die Kranbrücke (3) ist mit ihren Schienen (12) entsprechend hoch angeordnet, wobei auch der Führungsbalken (5) entsprechend lang ist.

Wie Fig. 1 verdeutlicht, wird in Ballenlager (10) bzw. im jeweiligen Lagerabschnitt eine vorzugsweise mittige Fahrgasse (11) gebildet, durch die die Stapelvorrichtungen (1) mit den gegriffenen Preßballen (2) entlang der seitlich anschließenden quer gerichteten Stapelreihen verfahren können. Durch die platzsparende Bauweise und den um seine Mittelachse drehbaren Führungsbalken (5) kann die Fahrgasse (11) sehr schmal sein. Die Preßballen (2) können fast auf der Stelle gedreht werden.

Zum Abholen und Verfahren werden die Preßballen (2) von der Greifeinrichtung (7) in Gassenlängsrichtung gehalten.
Ist die gewünschte Stapelreihe erreicht, dreht der Führungsbalken (5) um 90° nach links oder rechts, so daß die Preßballen (2) über eine Fahrbewegung des Laufwagens (4) zur Stapelreihe oder an einen leeren Stapelplatz gebracht werden können.

Die Stapelvorrichtung (1) setzt die Preßballen (2) bzw. die Kleinstapel zunächst in mehreren Lagen übereinander, bis die gewünschte Stapelhöhe erreicht ist. Hierbei können die Stapel mit etwas Schräglage aufgebaut werden und sich an der Wand oder einer anderen Stützfläche anlehnen. Dann wird in der Reihe der nächste Stapel aus mehreren Lagen übereinander gebildet. Auf diese Weise wächst die Reihe nach und nach zur Fahrgasse (11) hin und wird in umgekehrter Richtung wieder abgebaut. Zwischen den Reihen muß nur sehr wenig Platz für die Gabelbewegung freigelassen werden.

Alternativ ist möglich, bei einem entsprechend großen Reihenabstand mit der Stapelvorrichtung (1) zwischen die Stapelreihen zu fahren und die Stapel von der Seite her auf- und abzubauen.

Die Stapelvorrichtungen (1) verfügen vorzugsweise über eine Fernsteuerung, die zugleich mit einer Lagerverwaltung gekoppelt ist. Im Ballenlager (10) können auf diese Weise unterschiedliche Preßballen (2) gehandhabt und gestapelt werden. Die Preßballen (2) können sich zum Beispiel nach der Größe, dem Gewicht, dem Inhalt bzw. Ballenmaterial, nach dem weiterverarbeitenden Kunden oder anderen Kriterien unterscheiden. Im Ballenlager (10) bzw. den Lagerabschnitten werden vorzugsweise sortenreine Stapelreihen gebildet.

An der Eingangsseite des Ballenlagers (10) und vorzugsweise am vorderen Ende der Fahrgasse(n) (11) sind ein oder mehrere Zwischenlager (17) angeordnet.
Vorzugsweise hat jeder Lagerabschnitt sein eigenes Zwischenlager (17). Die Zwischenlager (17) besitzen jeweils vorzugsweise mehrere Speicherplätze (20), auf denen aus einzeln zugeführten Preßballen (2) die vorerwähnten Kleinstapel gebildet und zur Abholung für die Stapelvorrichtung (1) bereitgestellt werden. Hierbei findet in den voneinander getrennten Speicherplätzen (20) wieder eine sortenreine Stapelbildung statt.

Die Zwischenlager (17) besitzen jeweils einen eigenen oder alternativ einen gemeinsamen Stapelbildner (18). Dieser weist einen Ballengreifer (19) auf, der quer zu den Speicherplätzen (20) und den Fahrgassen (11) verfahrbar und außerdem heb- und senkbar gelagert und angetrieben ist. Der Ballengreifer (19) übernimmt die Einzelballen von einer Aufnahmestelle (23), bringt sie zu den einzelnen Speicherplätzen (20) und stapelt sie dort zu der vorgesehenen Kleinstapelhöhe auf.

Jeder Speicherplatz (20) verfügt ferner über einen Förderer (21), der vorzugsweise als Rollenförderer ausgebildet ist. Es sind aber auch andere beliebige Ausgestaltungen möglich. Die Kleinstapel werden am vorderen Ende der Speicherplätze (20) gebildet. Ist ein Kleinstapel fertig, wird er vom Förderer (21) ans rückwärtige Speicherplatzende (20) bewegt und steht dort zur Abholung für die Stapelvorrichtungen (1) bereit.

In einer vereinfachten Ausführungsform kann auch nur ein einzelner Stapelbildner (18) mit einem als einfache Plattform oder dgl. ausgebildeten Zwischenlager vorgesehen sein. Hier werden alle ankommenden Ballen ohne Rücksicht auf Sorte, Qualität etc. zu einem Kleinstapel aufgeschichtet und ins Ballenlager (10) verfrachtet.

Die Zwischenlager (17) sind in der bevorzugten Ausführungsform direkt mit den vorgeschalteten Ballenpressen (13) verbunden. Im gezeigten Ausführungsbeispiel sind zwei Ballenpressen (13) vorhanden. Es können aber auch mehr oder weniger sein. Die fertiggestellten Preßballen (2) werden auf geeigneten Förderbahnen (14) zusammengeführt. Mittels eines Drehtisches (15) können sie einzeln in die handhabungsgerechte Lage gedreht werden. Über eine Förderbrücke (16) werden sie dann der Aufnahmestelle (23) des oder der Zwischenlager (17) zugeführt. Die Förderbrücke (16) läßt sich aufklappen, um eine Durchfahrt von Fahrzeugen zu ermöglichen.

Am rückwärtigen Ende des Ballenlagers (10) bzw. der Lagerabschnitte ist jeweils eine Ausgabestelle (22) vorgesehen. Es können auch mehrere solcher Ausgabestellen (22) vorhanden sein. Die Stapelvorrichtungen (1) bedienen die Ausgabestellen (22) und liefern die Preßballen (2) einzeln oder in den vorerwähnten Kleinstapeln ab. Die Ausgabestellen (22) können einen eigenen Förderer (nicht dargestellt) aufweisen, mit dem die Preßballen (2) in Abholpositionen für andere Fördermittel, z.B. Flurförderzeuge, gebracht werden.

Zur Automatisierung des Ballenlagers (10) ist eine vorzugsweise anlagenübergreifende Steuerung (nicht dargestellt) vorgesehen. Die Steuerung ist mit einer Lagerverwaltung gekoppelt und kann auch mit einer übergreifenden Prozeßsteuerung der Ballenpressen (13) gekoppelt sein. Damit lassen sich die von den Ballenpressen (13) angelieferten Preßballen automatisch über die Zwischenlager (17) nach Lagerabschnitten sortenrein aufteilen und in den besagten Kleinstapeln bereitstellen. Gleichermaßen automatisch erfolgt dann die Abholung, Handhabung und Einlagerung durch die Stapelvorrichtungen (1). Auch die Ausgabe der Preßballen (2) an der Ausgangsseite des Ballenlagers (10) ist dann automatisiert. Alternativ kann das Ballenlager (10) auch eine eigenständige Lagerverwaltung und ggf. Steuerung aufweisen.

Für die Lagerverwaltung besitzt die Steuerung einen Rechner mit einem Lagerverwaltungsprogramm und einer Datenbank für die virtuellen Stapel- oder Lagerplätze der Ballen (2) sowie ggf. mit einem Sortierprogramm. In der Datenbank werden in geeigneten Datensätzen Informationen über den Lagerort des Preßballens (2), die Ballenidentität, die Ballen- bzw. Fasersorte, die Faserqualität, die Ballengröße, die Art der Verpackung, das Herstellungsdatum und sonstige beliebige produktbezogene oder sonstig relevante Balleneigenschaften gespeichert.

Anders als bei Regallagern mit einem vorgegebenen Fassungsvermögen und festen Regalpositionen haben die Ballen (2) im Ballenlager (10) nicht unbedingt einen festen vorbestimmbaren Platz, der als absolute Position angesprochen werden kann. Die Stapel und Reihen der auf- und aneinanderliegenden Ballen (2) entstehen erst beim Einlagern, wobei Reihenlänge und Stapelhöhe variieren können, was z.B. auch von der Ballengröße abhängen kann. Der Lagerort kann sich auch ein- oder mehrmal ändern, z.B. beim Sortieren oder beim Nachrücken, wenn ein anderer Ballen mitten aus einer Reihe herausgeholt wird. Die Lagerorte der Ballen (2) werden in einer Relativbeziehung zueinander identifiziert und gespeichert, z.B. nach ihrer Position in der Reihe und im Stapel. Durch die Datenzuordnung ist es möglich, jeden Ballen (2) im Ballenlager (10) nach dem Einlagern sofort und zuverlässig wieder zu finden.

Dies ist für die Durchführung einer Qualitätsprüfung nützlich, die vor dem Einlagern der Preßballen (2) durchgeführt wird. Hierzu werden allen oder einzelnen angelieferten Preßballen (2) Proben entnommen und auf gewisse Eigenschaften, wie Fasersorte, Faserqualität etc. untersucht. Der Preßballen (2) kann nach der Probenentnahme sofort ins Ballenlager (10) verbracht werden. Die Qualitätsdaten können dann später dem zugehörigen Datensatz angefügt werden. Dies ist anhand einer eindeutigen Kennzeichnung, z. B. einer fortlaufenden Ballennummer möglich. Dadurch entfällt das bisher übliche manuelle Markieren eines Preßballens. Hierzu mußte bisher an eingelagerten Ballen eine Kennzeichnung oder Markierung mit den Qualitätsdaten nachträglich angebracht werden, was eine erhebliche Unfallgefahr bedeutete und deshalb auch die maximale Stapelhöhe im Ballenlager begrenzte. Durch die vollautomatische rechnergestützte Lagerverwaltung ist dies nicht mehr erforderlich.

Die vollautomatische Lagerverwaltung gestattet es außerdem, die angelieferten Preßballen (2) ohne Rücksicht auf Ballensorte, Faserqualität und sonstige Unterscheidungskriterien zu Kleinstapeln aufzuschichten und ins Ballenlager (10) zu verbringen. Das Einlagern geht dadurch besonders schnell vor sich. Außerdem können die Zwischenlager (17) vereinfacht werden.

Die Ballensortierung kann dann zu gegebener Zeit im Ballenlager (10) stattfinden und vollautomatisch ablaufen. Der Sortiervorgang wird dabei mit der Stapelvorrichtung (1) durchgeführt. Nachdem von jedem Preßballen die produktbezogenen Daten und der Lagerort bekannt sind, kann die sortenreine Sortierung anhand eines geeigneten Sortierprogrammes durchgeführt werden. Dies geschieht z.B. als Zwischensortierung in den betriebslosen Zeiten, z.B. in der Nachtschicht. Innerhalb des Ballenlagers (10) sind für den Sortiervorgang geeignete Freiflächen als Pufferplätze vorgesehen. Die Stapel oder Reihen der Ballen (2) können dabei nach Ballensorten und innerhalb einer Sorte nach unterschiedlichen Qualitäten und sonstigen geeigneten Kriterien geordnet werden. Die geordneten Stapel bzw. Reihen erlauben beim Auslagern einen besonders schnellen Zugriff und Abtransport der Ballen (2).

In einer weiteren Variante können die Preßballen (2) ungeordnet eingelagert und erst beim Auslagern sortiert werden. Hierzu wird ebenfalls auf die virtuellen Speicher- oder Stapelplätze der Ballen in der Datenbank zurückgegriffen.

Abwandlungen des dargestellten Ausführungsbeispiels sind in verschiedener Weise möglich. Anstelle der Krankonstruktion können auch selbstlaufende Portale vorgesehen sein. Die Dreheinrichtung (6) kann an einer anderen Stelle sitzen, wobei zum Beispiel ein aus zwei Abschnitten bestehender Führungsbalken (5) in sich drehbar ist oder die Drehbeweglichkeit im Fahrwerk (9) bzw. der Greifeinrichtung (7) vorhanden ist. Für einfachere Ausführungsformen können die Zwischenlager (17) reduziert oder weggelassen werden. Desgleichen kann auch auf die separaten Ausgabestellen (22) verzichtet werden. Das Ballenlager (10) kann ferner vollkommen eigenständig ausgebildet und verwaltet werden, wobei z.B. keine direkte Verbindung zu den Ballenpressen (13) besteht. Auch die anderen konstruktiven Ausgestaltungen der einzelnen Anlagen- und Vorrichtungsteile sind im Rahmen des allgemeinen Fachwissens Abwandlungen zugänglich.

### BEZUGSZEICHENLISTE

- 1: Stapelvorrichtung
- 2: Preßballen
- 3: Kranbrücke
- 4: Laufwagen
- 5: Führungsbalken
- 6: Dreheinrichtung
- 7: Greifeinrichtung
- 8: Gabel
- 9: Fahrwerk
- 10: Ballenlager
- 11: Fahrgasse
- 12: Schiene
- 13: Ballenpresse
- 14: Förderbahn
- 15: Drehtisch
- 16: Förderbrücke
- 17: Zwischenlager
- 18: Stapelbildner
- 19: Ballengreifer
- 20: Speicherplatz
- 21: Förderer, Rollenförderer
- 22: Ausgabestelle
- 23: Aufnahmestelle

## Patentansprüche

1. Verfahren zum Handhaben und Stapeln von Preßballen (2) aus textilen oder pflanzlichen Fasermaterialien in einem Ballenlager, bei dem die Preßballen (2) von mindestens einer mehrachsig verfahrbaren und mit einer höhenbeweglichen Greifeinrichtung (7) versehenen, kran- oder portalartigen Stapelvorrichtung (1) automatisch zu mehrlagigen Stapeln in getrennten Reihen aufeinandergeschichtet werden, wobei die Preßballen (2) von der Greifeinrichtung (7) seitlich gefaßt und mit vertikaler Führung an einem herabhängenden Führungsbalken (5) auf und ab bewegt werden.

2. Verfahren nach Anspruch 1, dadurch **gekennzeichnet**, daß mit der Stapelvorrichtung (1) Kleinstapel von zwei oder mehr, vorzugsweise drei Preßballen (2) gemeinsam gegriffen und gehandhabt werden.

3. Verfahren nach Anspruch 2, dadurch **gekennzeichnet**, daß die Kleinstapel in ein oder mehreren Zwischenlagern (17) vor dem Ballenlager (10) gebildet werden.

4. Verfahren nach Anspruch 1, 2 oder 3, dadurch **gekennzeichnet**, daß die Ballenstapel in mehreren Reihen angeordnet werden, die seitlich von einer Fahrgasse (11) angeordnet sind und sich quer zu dieser erstrecken.

5. Verfahren nach Anspruch 1 oder einem der folgenden, dadurch **gekennzeichnet**, daß das Ballenlager (10) automatisch gesteuert und verwaltet wird.

6. Verfahren nach Anspruch 5, dadurch **gekennzeichnet**, daß das Ballenlager (10) mit einem Lagerverwaltungsprogramm und einer Datenbank verwaltet wird, wobei in der Datenbank der Lagerort und die produktbezogenen Daten jedes Preßballens (2) gespeichert sind.

7. Verfahren nach Anspruch 1 oder einem der folgenden, dadurch **gekennzeichnet**, daß die Preßballen (2) im Ballenlager (10) nach produktbezogenen Unterscheidungskriterien geordnet werden.

8. Verfahren nach Anspruch 6, dadurch **gekennzeichnet**, daß die Preßballen (2) in ein oder mehreren Zwischenlagern (17) bei der Bildung der Kleinstapel sortiert und geordnet werden.

9. Verfahren nach Anspruch 6, dadurch **gekennzeichnet**, daß die Preßballen (2) zunächst ungeordnet im Ballenlager (10) eingelagert und danach im Ballenlager (10) von der Stapelvorrichtung automatisch umsortiert und geordnet werden.

10. Vorrichtung zum Handhaben und Stapeln von Preßballen (2) aus textilen oder pflanzlichen Fasermaterialien in einem Ballenlager (10), welche mindestens eine mehrachsig verfahrbare kran- oder portalartige Stapelvorrichtung (1) mit einem Laufwagen (4) und einem herabhängenden Führungsbalken (5) aufweist, an dem eine für ein oder mehrere Preßballen (2) ausgelegte Greifeinrichtung (7) höhenbeweglich geführt ist.

11. Vorrichtung nach Anspruch 10, dadurch **gekennzeichnet**, daß die Greifeinrichtung (7) um die Vertikale drehbar (6) ist.

12. Vorrichtung nach Anspruch 10 oder 11, dadurch **gekennzeichnet**, daß die Stapelvorrichtung (1) eine Fernsteuerung aufweist.

13. Vorrichtung nach Anspruch 10, 11 oder 12, dadurch **gekennzeichnet**, daß der Führungsbalken (5) an einem Laufwagen (4) angeordnet ist, der eine Dreheinrichtung (6) für den Führungsbalken (5) aufweist.

14. Vorrichtung nach Anspruch 10 oder einem der folgenden, dadurch **gekennzeichnet**, daß die Greifeinrichtung (7) mehrere mit Abstand übereinander angeordnete, querbewegliche Gabeln (8) aufweist, die einen Kleinstapel von mehreren, vorzugsweise drei Preßballen (2) an den Seiten greifen und einspannen.

15. Vorrichtung nach Anspruch 10 oder einem der folgenden, dadurch **gekennzeichnet**, daß die Stapelvorrichtung (1) mit einem Zwischenlager (17) zusammenwirkt, das einen Stapelbildner (18) aufweist.

16. Vorrichtung nach Anspruch 15, dadurch **gekennzeichnet**, daß das Zwischenlager (17) mehrere getrennte Speicherplätze (20) für Preßballenstapel (2) aufweist.

17. Vorrichtung nach Anspruch 15 oder 16, dadurch **gekennzeichnet**, daß der Stapelbildner (18) einen verfahrbaren und höhenbeweglichen Ballengreifer (19) aufweist.

18. Vorrichtung nach Anspruch 16 oder 17, dadurch **gekennzeichnet**, daß die Speicherplätze (20) einen Förderer (21) aufweisen, der die Ballenstapel (2) in Abholposition bereitstellt.

19. Vorrichtung nach Anspruch 10 oder einem der folgenden, dadurch **gekennzeichnet**, daß das Zwischenlager (17) mit ein oder mehreren Ballenpressen (13) verbunden ist.

20. Vorrichtung nach Anspruch 10 oder einem der folgenden, dadurch **gekennzeichnet**, daß die Stapelvorrichtung (1) mit einer Ausgabestelle (22) zusammenwirkt.

21. Vorrichtung nach Anspruch 10 oder einem der folgenden, dadurch **gekennzeichnet**, daß eine anlagenübergreifende Steuerung vorgesehen ist.

22. Vorrichtung nach Anspruch 21, dadurch **gekennzeichnet**, daß die Steuerung einen Rechner mit einem Lagerverwaltungsprogramm und einer Datenbank sowie gegebenenfalls einem Sortierprogramm aufweist.

## Claims

1. Method of handling and stacking pressed bales (2) of textile or vegetable fibre materials in a bale store, in which method the pressed bales (2) are automatically layered one on top of another to form multilayer stacks in separate rows by means of at least one crane-like or gantry-like stacking device (1) which can be moved on multiple axes and is provided with a vertically movable gripping device (7), the pressed bales (2) being gripped at the sides by the gripping device (7) and being moved up and down with vertical guiding on a vertically suspended guide beam (5).

2. Method according to Claim 1, characterized in that small stacks of two or more, preferably three, pressed bales (2) are gripped and handled together by the stacking device (1).

3. Method according to Claim 2, characterized in that the small stacks are formed in one or more intermediate depots (17) before the bale store (10).

4. Method according to Claim 1, 2 or 3, characterized in that the bale stacks are arranged in multiple rows which are arranged at the side of a driving lane (11) and extend transversely to the latter.

5. Method according to Claim 1 or one of the following claims, characterized in that the bale store (10) is controlled and managed automatically.

6. Method according to Claim 5, characterized in that the bale store (10) is managed by means of a store management program and a database, the store location and the product-related data for each pressed bale (2) being stored in the database.

7. Method according to Claim 1 or one of the following claims, characterized in that the pressed bales (2) are arranged in the bale store (10) according to product-related differentiation criteria.

8. Method according to Claim 6, characterized in that the pressed bales (2) are sorted into and arranged in one or more intermediate depots (17) for the formation of the small stacks.

9. Method according to Claim 6, characterized in that the pressed bales (2) are initially stored in the bale store (10) in an unsorted manner and are then automatically resorted and arranged in the bale store (10) by the stacking device.

10. Device for handling and stacking pressed bales (2) made of textile or vegetable fibre materials in a bale store (10), which device has at least one crane-like or gantry-like stacking device (1) which can be moved on multiple axes and has a carriage (4) and a vertically suspended guide beam (5), on which a gripping device (7), designed to take one or more pressed bales (2), is guided with vertical movement.

11. Device according to Claim 10, characterized in that the gripping device (7) can be rotated (6) about the vertical axis.

12. Device according to Claim 10 or 11, characterized in that the stacking device (1) has a remote control unit.

13. Device according to Claim 10, 11 or 12, characterized in that the guide beam (5) is arranged on a carriage (4) which has a rotating device (6) for the guide beam (5).

14. Device according to Claim 10 or one of the following claims, characterized in that the gripping device (7) has a plurality of transversely movable forks (8) which are arranged with spacing one above the other and grip and clamp the sides of a small stack of a plurality of pressed bales (2), preferably three pressed bales.

15. Device according to Claim 10 or one of the following claims, characterized in that the stacking device (1) interacts with an intermediate depot (17) which has a stack former (18).

16. Device according to Claim 15, characterized in that the intermediate depot (17) has a plurality of separate storage spaces (20) for stacks of pressed bales (2).

17. Device according to Claim 15 or 16, characterized in that the stack former (18) has a displaceable and vertically movable bale gripper (19).

18. Device according to Claim 16 or 17, characterized in that the storage spaces (20) have a conveyor (21) which supplies the bale stacks (2) in a collection position.

19. Device according to Claim 10 or one of the following claims, characterized in that the intermediate depot (17) is connected to one or more baling presses (13).

20. Device according to Claim 10 or one of the following claims, characterized in that the stacking device (1) interacts with an output point (22).

21. Device according to Claim 10 or one of the following claims, characterized in that an overall plant control unit is provided.

22. Device according to Claim 21, characterized in that the control unit has a computer with a store management program and a database and, if appropriate, a sorting program.

## Revendications

1. Procédé de manutention et d'empilage de balles pressées (2) en matériaux fibreux textiles ou végétaux dans un entrepôt à balles, selon lequel les balles pressées (2) sont superposées de façon automatique en piles à plusieurs couches, en rangées séparées, par au moins un dispositif d'empilage (1) du genre grue ou portique, pouvant être déplacé dans plusieurs axes et pourvu d'un moyen de préhension (7) mobile en hauteur, les balles pressées (2) étant saisies sur le côté par le moyen de préhension (7) et étant montées et descendues en étant guidées verticalement sur une poutre de guidage pendante (5).

2. Procédé selon la revendication 1, **caractérisé** en ce qu'avec le dispositif d'empilage (1), on saisit et manipule conjointement de petites piles d'au moins deux, de préférence trois balles pressées (2).

3. Procédé selon la revendication 2, **caractérisé** en ce que les petites piles sont formées dans un ou plusieurs lieux de stockage temporaire (17) situés devant l'entrepôt à balles (10).

4. Procédé selon la revendication 1, 2 ou 3, **caractérisé** en ce que les piles de balles sont disposées en plusieurs rangées, qui sont disposées sur le côté d'une voie de déplacement (11) et s'étendent transversalement à cette dernière.

5. Procédé selon la revendication 1 ou une des suivantes, **caractérisé** en ce que l'entrepôt à balles (10) est commandé et géré de façon automatisée.

6. Procédé selon la revendication 5, **caractérisé** en ce que l'entrepôt à balles (10) est géré à l'aide d'un programme de gestion de stocks et d'une banque de données, le lieu d'entreposage et les données produit de chaque balle pressée (2) étant mémorisés dans la banque de données.

7. Procédé selon la revendication 1 ou une des suivantes, **caractérisé** en ce que les balles pressées (2) sont rangées dans l'entrepôt à balles (10) en fonction de critères distinctifs relatifs au produit.

8. Procédé selon la revendication 6, **caractérisé** en ce que les balles pressées (2) sont rangées et classées dans un ou plusieurs lieux de stockage temporaire (17), lors de la formation des petites piles.

9. Procédé selon la revendication 6, **caractérisé** en ce que les balles pressées (2) sont d'abord chargées dans l'entrepôt à balles (10) sans être rangées, puis sont, dans l'entrepôt à balles (10), classées et rangées de façon automatisée par le dispositif d'empilage.

10. Dispositif de manutention et d'empilage de balles pressées (2) en matériaux fibreux textiles ou végétaux dans un entrepôt à balles (10), comprenant au moins un dispositif d'empilage (1) du genre grue ou portique, pouvant être déplacé dans plusieurs axes et pourvu d'un chariot (4) et d'une poutre de guidage pendante (5), sur laquelle est guidé en déplacement vertical un moyen de préhension (7) conçu pour une ou plusieurs balles pressées (2).

11. Dispositif selon la revendication 10, **caractérisé** en ce que le moyen de préhension (7) est rotatif (6) autour de la verticale.

12. Dispositif selon la revendication 10 ou 11, **caractérisé** en ce que le dispositif d'empilage (1) présente une unité de commande à distance.

13. Dispositif selon la revendication 10, 11 ou 12, **caractérisé** en ce que la poutre de guidage (5) est disposée sur un chariot (4) qui présente un moyen de rotation (6) pour la poutre de guidage (5).

14. Dispositif selon la revendication 10 ou une des suivantes, **caractérisé** en ce que le moyen de préhension (7) présente plusieurs fourches (8) superposées à distance entre elles et mobiles transversalement, qui saisissent sur les côtés et enserrent une petite pile de plusieurs, de préférence de trois balles pressées (2).

15. Dispositif selon la revendication 10 ou une des suivantes, **caractérisé** en ce que le dispositif d'empilage (1) coopère avec un lieu de stockage temporaire (17) qui présente un moyen de formation de piles (18).

16. Dispositif selon la revendication 15, **caractérisé** en ce que le lieu de stockage temporaire (17) présente plusieurs places de stockage séparées (20) pour des piles de balles pressées (2).

17. Dispositif selon la revendication 15 ou 16, **caractérisé** en ce que le moyen de formation de piles (18) présente un preneur de balles (19) mobile en translation et en hauteur.

18. Dispositif selon la revendication 16 ou 17, **caractérisé** en ce que les places de stockage (20) présentent un convoyeur (21) qui met à disposition les piles de balles (2) en position d'enlèvement.

19. Dispositif selon la revendication 10 ou une des suivantes, **caractérisé** en ce que le lieu de stockage temporaire (17) est relié à une ou plusieurs presses à balles (13).

20. Dispositif selon la revendication 10 ou une des suivantes, **caractérisé** en ce que le dispositif d'empilage (1) coopère avec un lieu de distribution (23).

21. Dispositif selon la revendication 10 ou une des suivantes, **caractérisé** en ce qu'il est prévu une unité de commande englobant l'ensemble de l'installation.

22. Dispositif selon la revendication 21, **caractérisé** en ce que l'unité de commande présente un ordinateur avec un programme de gestion de stocks et une banque de données, ainsi éventuellement qu'un programme de classement.
